# DEMANDE DE BREVET EUROPEEN

(11) **EP 1 418 010 A1**
(43) Date de publication de la demande: **12.05.2004**
(21) Numéro de dépôt: 03292779.0
(22) Date de dépôt: 06.11.2003
(51) Int. Cl.: B09C 1/00, B09C 1/08

(54) **Procédé, dispositif et installation de décontamination d'un materiau pollué**

(30) Priorité: 06.11.2002 FR 0213856
(71) Demandeur: Entreprise de Travaux Publics André et Max Brezillon, 60400 Noyon (FR)
(72) Inventeur: Arts, Alexis, 60200 Compiegne (FR); Cedou, Claude, 92410 Ville D'Avray (FR); Poux, Dominique, 95290 L'Isle Adam (FR)
(74) Mandataire: Schrimpf, Robert

(57) **Abrégé**

On met le matériau (2') au contact avec un gaz dans une cellule (4) où le matériau est introduit, brassé par deux arbres à pales rotatifs et parallèles qui le fractionnent dans un flux de gaz, et évacué, et on extrait le gaz de la cellule pour entraîner le polluant.

L'invention s'applique notamment à la décontamination d'un sol ou d'une boue ou d'un pulvérulent contaminés par des polluants éliminables en phase gazeuse.

## Description

L'invention concerne la décontamination d'un matériau contaminé par des polluants éliminables en phase gazeuse, soit parce que le polluant est lui-même volatilisable soit parce que le polluant est divisé en particules que l'on peut mettre en suspension dans un gaz.

On connaît deux techniques principales pour éliminer de tels polluants.

La technique d'extraction des polluants en phase vapeur (appelé couramment « tertre ventilé ») consiste habituellement à faire circuler de l'air dans le matériau en place (sol non excavé) ou dans le matériau mis en tas. Cette technique revient à faire circuler pendant longtemps un flux d'air relativement faible dans une grande quantité de matériau.

Une autre technique, beaucoup plus efficace mais plus lourde, est la désorption thermique à basse ou moyenne température. Cette technique consiste à brasser le matériau tout en augmentant la température de façon à faciliter l'évaporation des polluants. Il est à noter que cette technique génère, en cas de présence d'éléments chlorés ou d'autres précurseurs, des gaz délicats à traiter à cause de la formation de dioxines et furanes sous l'effet de l'élévation de température.

La présente invention vise à combiner les avantages de ces deux techniques sans en supporter les inconvénients.

Parmi les avantages recherchés, on notera en particulier les suivants :
- obtention d'un niveau de dépollution élevé, sur tout type de matériau,
- résultat du traitement obtenu en un temps très court (moins d'une heure contre plusieurs semaines à plusieurs mois pour la ventilation).
- Garanties sur l'obtention du résultat sans aléas (connaissance instantanée du résultat du traitement sans avoir à attendre la fin du traitement comme c'est le cas pour la ventilation).
- Obtention d'un résultat de décontamination homogène et complet.
- Récupération des polluants à température faible et au-dessous des seuils de formation des composés dioxines/furanes,
- Installation facilement déplaçable, et de faible encombrement, particulièrement adaptée à la rémédiation d'un matériau pollué, ou le traitement ou la valorisation sur site d'un matériau pollué ou de déchets industriels, permettant l'application même en zone urbaine et sur de petites quantités.

On connaît (brevet US 4 927 293) un procédé de décontamination d'un matériau contaminé par un polluant éliminable en phase gazeuse, dans lequel on met le matériau en contact avec un flux de gaz pour le dépolluer, dans une cellule où ledit matériau est introduit et dont il est évacué, et dans lequel on évacue le gaz de la cellule pour entraîner le polluant.

Le brassage, c'est-à-dire la mise en contact du matériau et du gaz, doit être maximal afin de volatiliser et d'extraire les polluants.

On y parvient selon l'invention en réalisant cette mise en contact au moyen de deux arbres à pales rotatifs et parallèles qui coopèrent pour fractionner le matériau dans le flux de gaz, afin de réaliser un contact aussi intime que possible entre le matériau et le gaz.

Le brassage est ajusté (durée, énergie et température de brassage) en fonction du matériau à traiter et des polluants à extraire (constantes de Henry, concentrations des polluants et texture des sols,...).

Dans une réalisation préférée, le matériau pollué, préalablement préparé, est introduit dans une cellule à atmosphère contrôlée dans laquelle une injection de gaz (généralement de l'air) et de réactifs liquides ou solides facilite la décontamination du matériau par évaporation et/ou séparation grâce à ses contacts intimes avec les flux de gaz et de réactifs. L'extraction des polluants se fait en continu par l'extraction du gaz de la cellule de traitement, lequel entraîne les polluants extraits (volatilisés ou détachés).

Les débits usuels sont les suivants : débit du matériau contaminé de 10 à 200 t/h et débit de gaz de 1 000 à 15 000 m³/h.

L'utilisation de deux arbres indépendants permet de régler le temps de séjour des matériaux dans l'enceinte jusqu'à les arrêter et faire ainsi un traitement par lots si on le désire.

Avantageusement, le procédé comprend une phase de maturation avant séparation, une phase d'extraction du polluant dans la cellule, une phase de post-conditionnement.
I. Dans la phase de maturation, on réalise de préférence les opérations consistant à :
   - mettre en contact le matériau à traiter avec des réactifs qui faciliteront l'extraction des polluants durant la phase ultérieure d'extraction dans la cellule ;
   - laisser agir les produits entre eux, de quelques minutes à plusieurs heures ;
   - capter les émanations éventuelles de gaz en vue du traitement de ces gaz dans le système de traitement du gaz sortant de la cellule de brassage.

   On utilise un ou plusieurs réactifs parmi les réactifs suivants :
   - éléments solides structurants facilitant la mise en contact des polluants et de l'atmosphère de traitement,
   - éléments solides modifiants la texture du matériau,
   - agents tensio-actifs facilitant la séparation et la libération des polluants,
   - agents oxydants aptes à dégrader certaines liaisons des polluants et à faciliter leur séparation du matériau.
II. Dans la phase d'extraction, on réalise de préférence une ou plusieurs des opérations suivantes :
   - préparation du matériau avant introduction dans la cellule(enlèvement des corps indésirables tels les grosses pièces métalliques qui risqueraient d'endommager l'appareil, criblage du matériau, par exemple pour ne traiter que les matériaux passant au tamis de 50 (mailles de 50mm x 50mm) ou de seuil de granulométrie inférieur, ajout éventuel d'un ou plusieurs agents structurants facilitant la pénétration des flux d'air dans le matériau (tels que pailles, copeaux, etc) et de réactifs à effets différés ou non (chaux vive ou éteinte, oxydant, eau, agents tensio-actifs, solvants facilitant les dissolutions de la pollution et les changements de phase,...),
   - introduction du matériau à traiter dans la cellule d'extraction après le laps de temps de maturation des produits permettant la réaction maximale dans cette cellule,
   - création d'un flux de gaz important (le plus généralement un flux d'air) dans la cellule par une mise en dépression et un fort taux de renouvellement,
   - brassage du matériau pendant le temps nécessaire à l'extraction des polluants (passage en phase gazeuse et/ou décrochage des polluants de la matrice),
   - ajout le cas échéant de réactifs destinés à faciliter l'extraction des polluants (action chimique sur le polluant et/ou la matrice du matériau avec ou sans changement de la température),
   - contrôle que la totalité des polluants extractibles a été extraite.

   Selon les polluants à extraire, la nature des sols et les taux de décontamination à atteindre ou le devenir du matériau décontaminé, ainsi que les réactifs employés, plusieurs phases ou opérations peuvent venir compléter cette phase d'extraction.
   Après extraction, le matériau et le gaz sont évacués de la cellule. Les polluants entraînés par le gaz sont récupérés ou détruits et la qualité des gaz rejetés à l'atmosphère est contrôlée.
III. Dans la phase de post-conditionnement, on réalise de préférence les opérations suivantes :
   - ajout le cas échéant de nutriments et de bactéries destinés à permettre une post biodégradation des polluants après traitement (le traitement biologique devenant possible, la quasi-totalité des polluants ayant été enlevée auparavant),
   - ajouts de liants (hydrauliques ou carbonés) ou d'autres éléments (minéraux ou organiques) afin de permettre une meilleure valorisation des matériaux après décontamination ou un blocage des traces résiduelles de pollution, notamment métalliques (inertage/stabilisation).

L'invention concerne également un dispositif et une installation pour la mise en oeuvre du procédé.

Le dispositif comprend :
- une cellule munie de moyens constituant au moins une entrée et au moins une sortie de matériau, et au moins une entrée et au moins une sortie de gaz, et des moyens pour créer un flux de gaz dans la cellule ;
- des moyens dans la cellule pour y mettre le matériau en contact avec le flux de gaz et le déplacer de l'entrée à la sortie, caractérisé en ce que les moyens pour réaliser cette mise en contact comprennent deux arbres à pales rotatifs et parallèles qui coopèrent pour fractionner le matériau dans le flux de gaz.

L'entrée de gaz peut être constituée par des fuites ou par de véritables entrées et le flux de gaz est de préférence provoqué par une aspiration.

Dans une réalisation préférée, cette cellule est mobile et transportable.

Dans un exemple typique, ses dimensions sont longueur 3 mètres, largeur 1,5 mètres et hauteur 1 mètre.

L'installation comprend un dispositif tel que défini ci-dessus, une aire de repos où le matériau pollué séjourne pour être soumis à l'action de réactifs, des moyens pour transporter le matériau de l'aire de repos jusque dans la cellule, des moyens pour recueillir le matériau évacué de la cellule, et des moyens pour recueillir et traiter le gaz évacué de la cellule.

Le matériau susceptible d'être décontaminé par le procédé peut comprendre toutes sortes de matrices contenant des polluants (par exemple : des sols pollués à matrice terreuse ou graveleuse), avec des teneurs en eau plus ou moins importantes allant jusqu'aux boues provenant d'opération de dragage ou de curage par exemple. Le matériau à traiter peut aussi être pulvérulents.

Le matériau peut venir d'opérations de terrassement, d'opérations industrielles ou agroalimentaires.

On décrira ci-après une installation de mise en oeuvre de l'invention, en référence aux figures du dessin joint sur lequel :
- la figure 1 est un schéma général de l'installation, et
- la figure 2 est un schéma d'une cellule de traitement, et

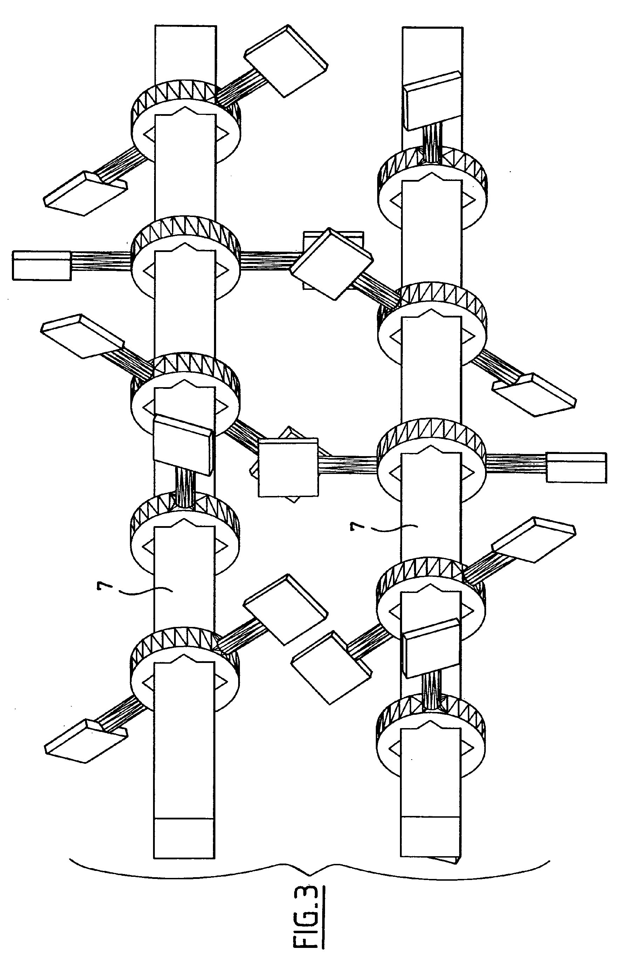

- la figure 3 est un schéma à plus grande échelle des deux arbres à pales de la cellule.

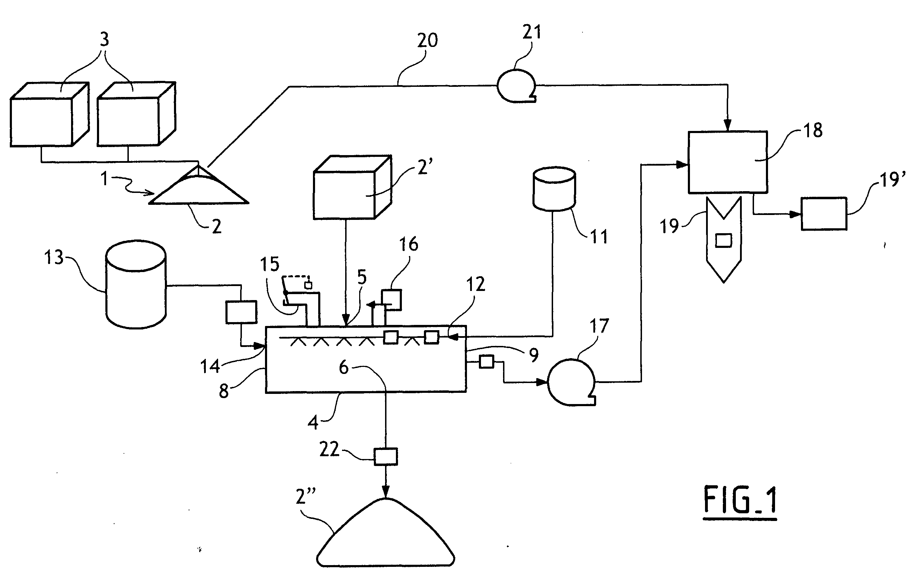

L'installation représentée sur la figure 1 comprend :
- une aire de stockage couverte (1) alimentée avec le matériau à traiter (2) et éventuellement avec des réactifs (3) convenablement dosés (phase de maturation).
- le matériau (2') après ce prétraitement chimique éventuel et un prétraitement mécanique éventuel (broyage, tri, etc) est envoyé en continu ou par charges dans une unité de traitement (4).

Cette unité de traitement est une cellule éventuellement inclinable où le matériau est introduit par exemple par une entrée (5) située de préférence en partie supérieure de la cellule. Il est évacué de la cellule par une sortie (6) située de préférence dans le fond de la cellule. Un flux d'air est créé dans la cellule par une mise en dépression au moyen d'un aspirateur.

Dans la cellule, le matériau est mis en contact avec l'air et déplacé par des arbres à pâles (7) rotatifs et parallèles actionnés par des moteurs (M), qui coopèrent pour le fractionner.

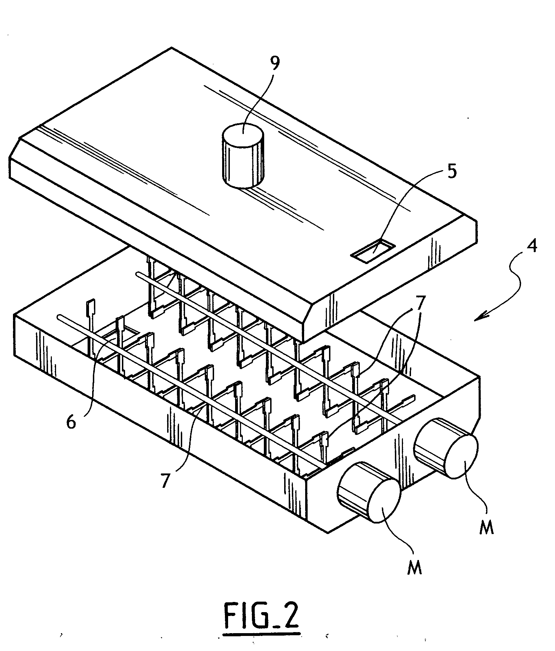

Ces arbres n'ont pas été représentés sur la cellule schématisée, dans la figure 1 mais ils le sont dans la variante de cellule représentée sur la figure 2.

Ces arbres sont parallèles et actionnés dans le même sens ou non ; ils peuvent avoir des vitesses identiques ou différentes. Le gaz de traitement, par exemple de l'air est introduit dans la cellule par une ou plusieurs entrées (8) (fig.1) ou par des défauts d'étanchéité (fig.2), et extrait de la cellule par une sortie (9) reliée à un aspirateur (17). Eventuellement, des produits de traitement liquides (11) sont injectés dans la cellule par une rampe (12) ainsi que des réactifs solides (13) introduits par une entrée appropriée (14).

L'installation comporte de préférence des systèmes de mise en dépression de la cellule (mise sous vide partielle et/ou mise en atmosphère confinée et contrôlée).

Les systèmes de mise en dépression sont ajustables en débit et en dépression. En effet, la volatilité et la concentration des polluants peuvent varier fortement d'un lot de matériau à l'autre, mais aussi pour un même lot de matériau à traiter. De même, la nature du matériau influe sur la force des liaisons matériaux/polluants et donc la facilité pour le polluant à se détacher du matériau.

Le système de capotage de la cellule est conçu pour interdire les accumulations dangereuses de gaz contenant des contaminants.

Par ailleurs, un système optionnel (15) de limitation de la dépression assure un débit minimal de gaz circulant dans la cellule et un système « anti-explosion » (16) limite les potentielles montées brusques de pression en cas d'incident (arrêt des systèmes d'extraction de gaz et passage en condition d'atmosphère explosible).

Par ailleurs, afin d'augmenter le brassage du matériau, la mise en place de cloisons, perpendiculairement au sens de sortie du matériau, permet d'entraver les flux des produits et d'augmenter l'intensité et les temps de brassage.

De même, si l'on emploie comme cellule un malaxeur à arbres parallèles, la création d'un différentiel de vitesse entre les deux arbres (d'un différentiel de quelques pour cents) et des rotations en sens inverses permettent un brassage très énergique des produits et une maximisation des échanges.

Un brassage efficace permet d'obtenir un résultat de traitement homogène, c'est pourquoi l'introduction directe de réactifs dans la zone de brassage est recommandée.

La volatilité des composés peut être améliorée par l'ajout de réactifs, liquides ou solides.

Avantageusement, l'installation comprend un ou plusieurs systèmes de captation pour séparer les fines particules de sols entraînées par l'air du brassage. Par exemple :
- un pot de détente placé à l'intérieur de la chambre de traitement limitera les envols de poussières à l'extérieur de la chambre de traitement,
- un système extérieur (pot de détente, cyclone, filtre à manches) sera choisi au contraire, afin de séparer du reste du flux de matériau, des particules fines et potentiellement polluées.

Le traitement peut être réalisé en continu ou par lots. Lors d'un traitement par lots, l'efficacité de l'opération d'extraction peut être contrôlée par la mesure de la concentration des polluants contenus dans l'air de brassage.

Le contrôle des gaz de brassage peut être réalisé par des sondes couplées à des analyseurs de gaz ou des détecteurs. Ces équipements doivent être adaptés aux polluants extraits.

Quand l'air de brassage, à la sortie de la cellule de brassage, est exempt de composés pollués, le matériau qui a été nettoyé de sa pollution peut être éjecté hors de la cellule par l'orifice de sortie (6), prêt à être évacué (2''), éventuellement après refroidissement (22).

Cet orifice de sortie est avantageusement équipé d'une trappe dont l'ouverture est coordonnée au traitement. Les réglages peuvent être les temps d'ouverture et de fermeture ou bien encore la taille de l'ouverture pour régler le débit de sortie lors de traitements rapides voire réalisés en continu.

Le système est avantageusement composé :
- d'une porte à contrepoids permettant le maintien d'une contre-pression réglable sur le matériau contenu à l'intérieur de la cellule afin d'augmenter au maximum le temps (et l'efficacité) du traitement, tout en s'adaptant aux variations potentielles de débit. Ce dispositif permet de plus une étanchéité partielle et la mise en dépression de la cellule afin d'éviter toute dissipation de pollution à l'extérieur de la cellule,
- d'une trappe (à ouverture à guillotine par exemple) à ouverture séquentielle ou combinée à certains paramètres de traitement (couple résistant sur les arbres de la cellule de brassage, débits, etc) selon la nature du matériau à décontaminer.

Ce double système permet une grande souplesse : choix des temps de séjour et des « taux de brassage/turbulence des produits ».

Un des buts du système est de dépolluer ou valoriser le matériau sans transférer les éléments polluants dans l'atmosphère, d'où la nécessité d'un traitement (18) des gaz de brassage pollués avant rejet (19) dans l'atmosphère ou recyclage (19').

Le système de traitement (18) est choisi en fonction des critères suivants :
- type de polluants,
- quantité et concentration des polluants,
- volume de gaz à traiter.

Les traitements possibles sont par exemple les suivants :
- lavage des gaz,
- adsorption sur charbon actif,
- oxydation catalytique ou UV,
- incinération à haute température (850°C ou 1 100°C si présence de chlore).

Eventuellement, les gaz extraits de la phase de maturation sont aspirés par un ventilateur (21) dans une conduite (20) aboutissant au dispositif de traitement (18).

Selon les polluants à extraire, la nature des sols et les taux de décontamination à atteindre ou le devenir des matériaux décontaminés, d'autres dispositifs peuvent venir compléter les équipements ci-dessus énumérés conformément au schéma de la figure 1.

Les résultats obtenus sont, par exemple :
- obtention d'excellents résultats, même sur les solvants réputés difficilement extractibles en phase gazeuse imbibés, de plus, sur des matrices argileuses : obtention de moins de 0,5 ppm de MEK (Méthyle Ethyle Cétone) après traitement réalisé en un seul passage à partir d'un matériau initial ayant une concentration de plus de 300ppm (soit un rendement de dépollution de plus de 99,8%),
- obtention de très bons résultats, même sur des boues liquides gorgées d'hydrocarbures lourds à chaîne longue : évacuation à plus de 70% des chaînes inférieures aux C30/C40 sur des boues liquides de 10 à 30% de siccité et avec des teneurs en HCT supérieures à 30%.

L'invention n'est pas limitée aux réalisations qui ont été décrites.

## Revendications

1. Procédé de décontamination d'un matériau contaminé par un polluant éliminable en phase gazeuse, dans lequel on met le matériau en contact avec un gaz pour le dépolluer, en réalisant cette mise en contact dans une cellule où ledit matériau est introduit et mis en contact avec un flux de gaz et évacué, et on extrait le gaz de la cellule pour entraîner le polluant, **caractérisé en ce qu'**on réalise cette mis en contact au moyen de deux arbres à pales rotatifs et parallèles, qui coopèrent pour réaliser un fractionnement du matériau dans le flux de gaz.

2. Procédé selon la revendication 1, dans lequel on introduit et on évacue le matériau dans la cellule avec un débit de 10 à 200 t/h et on introduit et on évacue le gaz dans la cellule avec un débit de 1000 à 15000 m³/h.

3. Procédé selon la revendication 1 ou 2, dans lequel l'introduction et l'évacuation du matériau et/ou l'introduction et l'évacuation du gaz sont réalisées en continu ou par lots.

4. Procédé selon l'une des revendications 1 à 3, dans lequel on crible le matériau avant son introduction dans la cellule pour ne traiter que les matériaux passant au tamis de 50 ou de seuil granulométrique inférieur.

5. Procédé selon l'une des revendications 1 à 4, dans lequel on introduit des réactifs dans le matériau, durant une étape de maturation, avant de l'introduire dans la cellule.

6. Procédé selon la revendication 5 dans lequel on utilise un ou plusieurs réactifs parmi les réactifs suivants :
- éléments solides structurants facilitant la mise en contact des polluants et de l'atmosphère de traitement,
- éléments solides modifiants la texture du matériau,
- agents tensio-actifs facilitant la séparation et la libération des polluants,
- agents oxydants aptes à dégrader certaines liaisons des polluants et à faciliter leur séparation du matériau.

7. Procédé selon l'une des revendications 1 à 6, dans lequel on aspire le gaz à l'intérieur de la cellule pour créer le flux de gaz.

8. Procédé selon l'une des revendications 1 à 7, dans lequel on fait tourner les arbres suivant des sens de rotation opposés et avec des vitesses identiques.

9. Procédé selon l'une des revendications 1 à 7, dans lequel on utilise des arbres à sens de rotation opposés et tournant à des vitesses différentes pour augmenter le fractionnement.

10. Procédé selon l'une des revendications 1 à 9, dans lequel on utilise une cellule inclinée.

11. Procédé selon l'une des revendications 1 à 10, dans lequel on introduit des réactifs dans la cellule pour faciliter l'extraction des polluants du matériau.

12. Procédé selon l'une des revendications 1 à 11, dans lequel on soumet le matériau qui est évacué de la cellule à un traitement pour permettre une post-biodégradation du matériau.

13. Procédé selon l'une des revendications 1 à 12, dans lequel on ajoute des liants hydrauliques ou carbonés et/ou des éléments minéraux ou organiques au matériau évacué de la cellule pour valoriser et/ou bloquer les traces résiduelles de polluant.

14. Procédé selon l'une des revendications 1 à 13, dans lequel on utilise de l'air ou un autre gaz inerte pour extraire et entraîner les polluants.

15. Procédé selon l'une des revendications 1 à 14, dans lequel on traite le gaz évacué de la cellule pour le débarrasser du polluant.

16. Dispositif pour la mise en place d'un procédé selon l'une des revendications 1 à 15, qui comprend :
- une cellule (4) munie de moyens constituant au moins une entrée (5) et au moins une sortie (6) de matériau et au moins une entrée (8) et au moins une sortie (9) de gaz,
- des moyens pour créer un flux de gaz dans la cellule,
- des moyens de mise en contact (7) dans la cellule pour y mettre le matériau en contact avec le flux de gaz, **caractérisé en ce que** les moyens de mise en contact comprennent deux arbres à pales rotatifs et parallèles (7) qui coopèrent pour fractionner le matériau dans le flux de gaz.

17. Dispositif selon la revendication 16 qui comprend un aspirateur (17) relié à la sortie de gaz pour créer le flux de gaz.

18. Dispositif selon la revendication 16 ou 17 qui comprend des moyens (M) pour faire tourner les deux arbres (7) avec des vitesses de rotation différentes.

19. Dispositif selon la revendication 16 ou 17 qui comprend des moyens pour faire tourner les deux arbres (7) avec des vitesses de rotation identiques.

20. Dispositif selon la revendication 18 ou 19 qui comprend des moyens pour faire tourner les deux arbres (7) avec des sens de rotation opposés.

21. Dispositif selon l'une des revendications 16 à 20 dont la cellule est mobile et transportable.

22. Dispositif selon l'une des revendications 16 à 21 qui comprend des moyens pour introduire des réactifs liquides ou solides (11, 13) dans la cellule (4).

23. Dispositif selon l'une des revendications 16 à 22 qui comprend un circuit de gaz relié à la sortie de gaz de la cellule (4) pour capter le gaz évacué et le conduire à un dispositif de traitement (18).

24. Installation pour la mise en oeuvre d'un procédé selon l'une des revendications 1 à 15, qui comprend un dispositif selon l'une des revendications 16 à 23, une aire de repos (1) où le matériau pollué (2) séjourne pour être soumis à l'action de réactifs (3), des moyens (20, 21, 18) pour extraire l'air pollué de l'aire de repos et le traiter.
